# EUROPEAN PATENT APPLICATION

(11) **EP 4 343 993 A1**
(43) Date of publication of application: **27.03.2024**
(21) Application number: 23199082.1
(22) Date of filing: 22.09.2023
(51) Int. Cl.: H02G 3/08, H02G 3/16, H02G 3/32, H04Q 1/06, H02B 1/01

(54) **SYSTEM COMPRISING A CABLE MANAGER**

(30) Priority: 26.09.2022 EP 22197874
(71) Applicant: EPOS Group A/S, 2750 Ballerup (DK)
(72) Inventor: INGEMANSSON, Niklas, DK-2750 Ballerup (DK); PONTOPPIDAN, Maja Lund, DK-2750 Ballerup (DK); ZEEBERG, Leif, 2920 Charlottenlund (DK)
(74) Representative: Demant

(57) **Abstract**

A device configured to be connected in between a multitude of communication devices, and the device having a cable management device. Also, the present disclosure relates to such a cable management device.

## Description

The present disclosure relates to a system for collaboration. The system may have at least two parts that are to be connected via one or more cables. One part may then comprise a cable manager.

In systems comprising a display device and one or more device to be connected thereto, an auxiliary device is often used as a hub for connection. Thus auxiliary device may then need to connect to further one or more devices, and, dependent on e.g. the room size wherein the system is installed, different size (both length and width) cables are to be connected to this auxiliary device.

It is thus desirable that such cables are not easily disconnected from the auxiliary device.

Therefore, there is a need to provide a solution that addresses at least some of the above-mentioned problems. Further the present disclosure provides at least an alternative to the prior art.

According to an aspect of the present description, an auxiliary device may be configured to receive a plurality of cables. Such a device could include a housing. Such a device could further include one or more input connectors. Such a device could further include one or more output connectors. Such a device could further include a cable reception area in the housing. Such a device could further include a cable management device configured to receive one or more cables. The cable management device may have a multitude of reception areas each are triangularly shaped, the multitude of reception areas each configured to receive at least one cable.

The cable management device may have a front side, an opposite back side, and end faces, wherein the end faces connect the front side and the back side at respective ends of the cable management device. An array of reception areas may be distributed evenly along the width of the cable management device, i.e. from one end face to the other.

The cable management device may include differently sized reception areas so as to allow e.g. one huge (larger than most) cable to be accommodated, however, it is presently preferred that all reception areas are of equal size/width/geometry.

Owing to the triangular geometry/V-shape differently sized cables, i.e.. cables of different withs/diameters, are able to be received in one and the same reception area, although preferably not at the same time.

In an auxiliary device according to the present disclosure, the multitude of reception areas may be arranged in an array. Having an array of reception areas allow for easy installation of a number of cables. Also, the cables will be relatively parallel in the area near the cable management device.

In an auxiliary device according to the present disclosure, the multitude of reception areas may each include groves. The groves are contemplated to provide increased retention force of the cables when received in the respective reception area. Further, the grove or grooves may be angled so that when a cable is pulled through the reception area, the groove help guide the cable further down in the V-shape/triangularly shaped part thereby causing the cable and reception area to self-lock.

The present disclosure further provides a cable management device. Such a cable management device may be used in an auxiliary device as described above, or in other devices. The cable management device may comprise a main body wherein a plurality of reception areas are formed. The plurality may range from 2 to 30 or even more, depending on the specific use. The cable management device may be delivered in a standard length, which may then be adapted depending on the intended installation it is to be used in. In the cable management device the plurality of reception areas may be triangularly shaped. The general, over-all geometry of each reception area may include such a triangularly shaped geometry.

In the cable management device according to the present disclosure, the plurality of reception areas may be arranged in an array. Having an array of a plurality of reception areas is advantageous when installing a number of cables to be connected to a device, such as an auxiliary device as described herein also. The array may include 2 to 30 reception areas, such as around 20 reception areas, such as around 10 reception areas, such as around 5.

In the auxiliary device and/or in the cable management device, one or more groves may be formed at one or more reception areas. This is contemplated to increase the retention force in the reception area so that it is less likely that a cable is dislodged by accident.

In an auxiliary device as described herein, a lid may be provided. Such a lid may help protect the cables and their connection to the auxiliary device. The lid may be provided with a material, such as a foam material, to engage with the cable management device and/or the cables so as to further help ensure that the cables are kept in position in their respective retention area.

### BRIEF DESCRIPTION OF DRAWINGS

The aspects of the disclosure may be best understood from the following detailed description taken in conjunction with the accompanying figures. The figures are schematic and simplified for clarity, and they just show details to improve the understanding of the claims, while other details are left out. Throughout, the same reference numerals are used for identical or corresponding parts. The individual features of each aspect may each be combined with any or all features of the other aspects. These and other aspects, features and/or technical effect will be apparent from and elucidated with reference to the illustrations described hereinafter in which:
Fig. 1 schematically illustrates a system comprising a multitude of communication devices to be connected to a display device,
Fig. 2 schematically illustrates a part of a cable management device,
Fig. 3 schematically illustrates a zoomed view of a part of a cable management device.

### DETAILED DESCRIPTION

The detailed description set forth below in connection with the appended drawings is intended as a description of various configurations. The detailed description includes specific details for the purpose of providing a thorough understanding of various concepts. However, it will be apparent to those skilled in the art that these concepts may be practiced without these specific details. Several aspects of the apparatus and methods are described by various blocks, functional units, modules, components, circuits, steps, processes, algorithms, etc. (collectively referred to as "elements"). Depending upon particular application, design constraints or other reasons, these elements may be implemented using electronic hardware, computer program, or any combination thereof. The terms "retention area" and "reception area" are used interchangeably throughout the following sections.

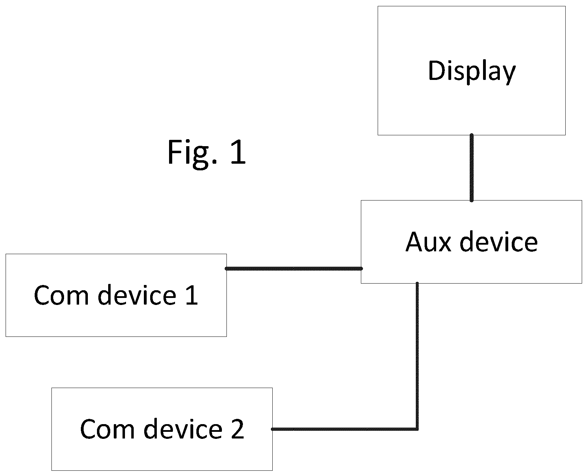

Fig. 1 schematically illustrates a setup where a number of communication devices are connected via an auxiliary device to a display device. Here the display device is a screen in a meeting room. Further, the display device, or the auxiliary device, may be connected to one, two or more speaker devices arranged in the room.

The auxiliary device could as here be configured to be mounted to a wall near or behind a screen, such as a large TV or the like. A number of cables, such as one for each device to be connected to the TV, could enter the auxiliary device. To ensure that there is only low or no risk of the cables being removed by accident, a cable management device is included in the auxiliary device.

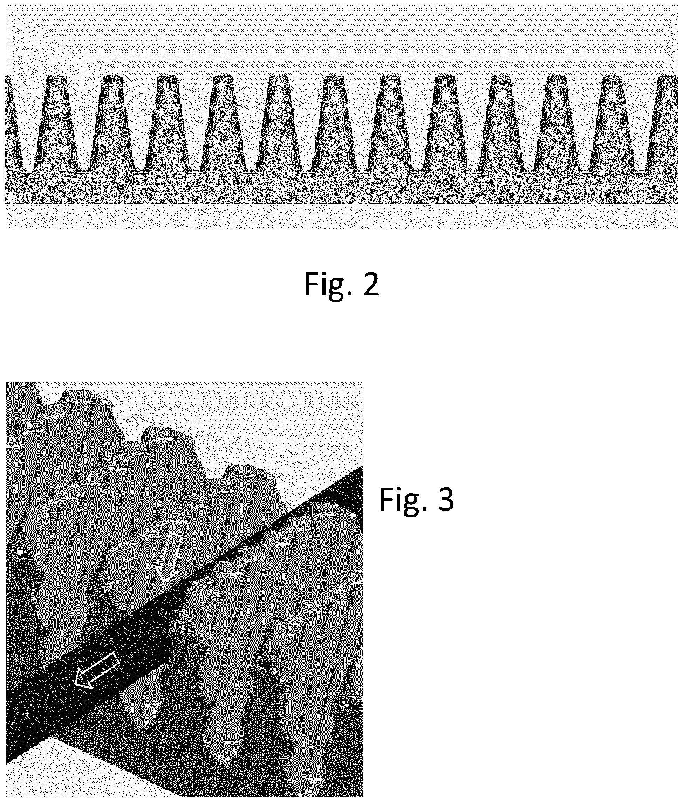

As schematically shown in Fig. 2, a cable management device as disclosed herein comprises a number of cable reception areas. Each of these areas are V-shaped or triangularly shaped. This means that when a cable is inserted into such a reception area, or volume, a smaller/thinner cable will be located further towards the bottom of the cable management device compared to a larger/thicker cable.

As seen in Fig. 3, the sides of the triangularly shaped walls include groves. The grooves are angled relative to the bottom of the cable management device. The angle is preferably to be in the range 10 to 80 degrees, such as around 45 degrees.

The design of the cable management device allows the user/installer to insert the cable they desire in the triangular slot. The thinner the cable is the further down the slot/retention area it goes. The design of the retention area also includes an array of angular grooves that help lock the cable in place and the more the cable is pulled the further the electrical cable is locked by friction. As illustrated in Fig. 3, when the cable is pulled along it's length as illustrated by the left-hand-side arrow, the cable moved down as illustrated by the arrow pointing down.

When inserting the cables, the cables may first be pushed down a bit, and then pulled in the direction of the grooves and possibly pulled towards the auxiliary device for ensuring proper installation lengths, indicated by the arrows in fig. 3. The cables are easily removed by moving/pulling/lifting the cable upwards. The triangularly shaped retention area cable is retained in the position by resisting pulls on the cable along the length of the cable, i.e., pulling the cable from the auxiliary device will be harder/impeded by the force originating from the triangularly shaped part.

The groove(s) will add further retention force, so that the cable is further secured in the auxiliary device. The angled grooves allow the cable to self-lock when pulled through.

An advantage of a cable management device as described herein is at least to avoid cable pullout of product without having cable specific lock(s).

As the cable management device may be positioned in a housing of an auxiliary device, an openable lid may be provided, such as a lid that can be fastened after a person has installed the desired cables. The lid could be shaped and located so as to help retain the cable or cables in their respective triangularly shaped reception area. This could include a layer of foam material or other suitable compressible material.

The cable management device may be made from a hard plastic material, such as polypropylene, ABS or the like. The cable management device may be made by molding, printing, additive processes or other suitable process.

The cable management device may be attached by screws into the housing of the auxiliary device. The auxiliary device may include a hub for colleting data from multiple sources and then, possibly, convert the signal to an output signal suitable for a display unit, such as e.g. HDMI or the like.

The auxiliary device may include one or more cable management device, e.g., one for input cables and one for output cables. Further, if the auxiliary device allows for connections via two sides of the housing of the auxiliary device, each side may include one or more reception areas to accommodate one or more cables. It is intended that each reception area holds one cable at most, however, it could be envisioned that a smaller and a large cable is able to be received in a single reception area.

Where in the current description it is mentioned that a cable management device is included, it is meant that at least one reception area is formed for reception of (at least) one cable. For convenience of the person installing the system, more reception areas than intended cables could be provided so as to accommodate for different width of e.g. plugs/sockets for different kinds of cables, e.g. HDMI, USB etc.

As used, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will also be understood that when an element is referred to as being "connected" or "coupled" to another element, it can be directly connected or coupled to the other element, but an intervening element may also be present, unless expressly stated otherwise. Furthermore, "connected" or "coupled" as used herein may include wirelessly connected or coupled. As used herein, the term "and/or" includes any and all combinations of one or more of the associated listed items. The steps of any disclosed method are not limited to the exact order stated herein, unless expressly stated otherwise.

It should be appreciated that reference throughout this specification to "one embodiment" or "an embodiment" or "an aspect" or features included as "may" means that a particular feature, structure or characteristic described in connection with the embodiment is included in at least one embodiment of the disclosure. Furthermore, the particular features, structures or characteristics may be combined as suitable in one or more embodiments of the disclosure. The previous description is provided to enable any person skilled in the art to practice the various aspects described herein. Various modifications to these aspects will be readily apparent to those skilled in the art, and the generic principles defined herein may be applied to other aspects. Reference to an element in the singular is not intended to mean "one and only one" unless specifically so stated, but rather "one or more." Unless specifically stated otherwise, the term "some" refers to one or more.

Accordingly, the scope should be judged in terms of the claims that follow.

## Claims

1. An auxiliary device configured to receive a plurality of cables, comprising:
a housing,
one or more input connectors,
one or more output connectors,
a cable reception area in the housing,
a cable management device configured to receive one or more cables,
the cable management device having a multitude of reception areas each are triangularly shaped, the multitude of reception areas each configured to receive at least one cable.

2. The auxiliary device according to claim 1, wherein the multitude of reception areas are arranged in an array.

3. A cable management device comprising:
a main body wherein a plurality of reception areas are formed,
wherein the plurality of reception areas are triangularly shaped.

4. The cable management device according to claim 10, wherein the plurality of reception areas are arranged in an array.
